# EUROPÄISCHE PATENTSCHRIFT

(11) **EP 0 512 093 B1**
(45) Veröffentlichungstag und Bekanntmachung des Hinweises auf die Patenterteilung: **04.10.1995**
(21) Anmeldenummer: 91920427.1
(22) Anmeldetag: 26.11.1991
(51) Int. Cl.: B29B 17/02, C08J 11/08

(54) **VERFAHREN ZUM RECYCLING VON MIT KLEBSTOFF BESCHICHTETEN KUNSTSTOFFOLIEN**
PROCESS FOR RECYCLING ADHESIVE-COATED PLASTICS FILM
PROCEDE DE RECYCLAGE DE FILMS EN MATIERE PLASTIQUE ENDUITS D'ADHESIF

(30) Priorität: 26.11.1990 DE 4037562
(43) Veröffentlichungstag der Anmeldung: 11.11.1992
(73) Patentinhaber: WNC-NITROCHEMIE GMBH, D-84544 Aschau (DE)
(72) Erfinder: HUBER, Gerhard, D-8264 Waldkraiburg (DE); PICHL, Karl, D-8261 Aschau (DE)
(74) Vertreter: Lieck, Hans-Peter, Dipl.-Ing.
(86) Internationale Anmeldenummer: EP9102238
(87) Internationale Veröffentlichungsnummer: WO9209413

(56) Entgegenhaltungen:
- EP-A- 0 144 495
- EP-A- 0 359 106
- US-A- 4 543 364
- PATENT ABSTRACTS OF JAPAN vol. 10, no. 78 (C-335)(2135) 27. März 1986 & JP,A,60 212 434 ( TAKEDA YAKUHIN KOGYO K.K. ) 24. Oktober 1985 siehe Zusammenfassung
- PATENT ABSTRACTS OF JAPAN vol. 11, no. 282 (C-446)(2729) 11. September 1987 & JP,A,67 079 241 (MITSUMARU KAGAKU K.K.) 11 April 1987 siehe Zusammenfassung

## Beschreibung

Die vorliegende Erfindung betrifft ein Verfahren zum Recycling von mit Klebstoff beschichteten und in Schnitzelform vorliegenden Kunststoffolien durch Trennen des Kunststoffmaterials und des Klebstoffs.

Das zugrundeliegende Problem fällt in erster Linie in das Gebiet der Herstellung von Kunststoff-Klebebändern, ist jedoch gleichermaßen auf jegliche Art von mit Klebstoff beschichtetem Kunststoffmaterial übertragbar. Bei der Herstellung von Kunststoff-Klebebändern sowie bei der Herstellung der anderen genannten Materialien entsteht Abfall, beispielsweise in Form von Randstreifen, die beim Zuschnitt des Materials im Produktionsprozeß anfallen. Unter einem allgemeineren Begriff "mit Klebstoff beschichteter Kunststoffabfall" wird hierbei vorzugsweise Abfall von thermoplastischen Kunststoffen verstanden, insbesondere von Polyethylen, Polypropylen, Polystyrol, Polyester und Polyvinylchlorid (PVC). Selbst durch optimierte Produktionsprozesse beträgt der Anteil dieses Abfalls - unter anderem auch durch Ausschußware - an der Produktion etwa 10 %, und fällt beim Hersteller der Kunststoffolien in aller Regel zu Folienschnitzeln unterschiedlicher Größe, vorzugsweise zwischen 1 und 10 mm Länge, zerkleinert an. Es ist nicht nur unter wirtschaftlichen Gesichtspunkten, sondern auch unter umweltbewußten Überlegungen eine Zielsetzung , diesen mit Klebstoff beschichteten Kunststoffolienabfall in seinen getrennten Bestandteilen einer Wiederverwendung zuzuführen.

Ein wirtschaftlich arbeitendes Verfahren der eingangs genannten Art ist nicht bekannt. Zwar offenbart die DE-A-38 31 023 ein Verfahren zum Aufbereiten und Wiederverwenden verschmutzter Kunststoffprodukte, bei dem die Folienschnitzel in einer Waschlösung aus einem organischen Lösungsmittel gerührt werden und anschließend in einer turbulenzfreien Zone der Waschlösung entnommen werden, anschließend durch Zentrifugalkraft mechanisch vorgetrocknet und danach durch heißes Gas thermisch nachgetrocknet werden und bei dem das Lösungsmittel aus der Trocknungsstufe in die Waschstufe rückgeführt wird. Dieses bekannte Verfahren vermag jedoch die Zielrichtung der vorliegenden Erfindung, nämlich das nachhaltige Trennen des Klebstoffs von den Kunststoffolien, nicht bzw. nicht in wirtschaftlicher Weise zu erreichen. Das bekannte Verfahren richtet sich vielmehr auf eine Reinigung der genannten Kunststoffabfälle von Verschmutzungen; mit den dortigen Verfahrensschritten sind verhältnismäßig fest an den Folienschnitzeln haftende Klebstoffe, beispielsweise wasser- und glykolunlösliche Klebstoffe auf der Basis von Kautschuk, nicht ausreichend von den Folienschnitzeln trennbar.

Der Erfindung liegt die Aufgabe zugrunde, ein verfahren der eingangs genannten Art zur Abtrennung des Klebstoffes von den Folienschnitzeln mittels eines Lösungsmittels anzugeben, welches wirtschaftlich und zuverlässig durchführbar ist.

Diese Aufgabe wird erfindungsgemäß dadurch gelöst, daß
a) die Folienschnitzel unter Zugabe des Lösungsmittels für eine vorbestimmte Zeitdauer geknetet werden derart, daß der Klebstoff im Lösungsmittel dispergiert;
b) die Lösungsmittel-Klebstoff-Dispersion anschließend von den Folienschnitzeln durch mechanische Krafteinwirkung getrennt und abgeführt wird.

Durch das Kneten der mit Klebstoff beschichteten Folienschnitzel in Anwesenheit des Lösungsmittels im Verfahrensschritt a) entsteht aus dem Klebstoff und dem Lösungsmittel eine pastöse, honigartige Dispersion, die sich in dem nachfolgenden Verfahrensschritt b) beispielsweise durch Quetsch- oder Scherkräfte von den Folienschnitzeln trennen läßt. Der Vorteil des neuen Verfahrens besteht darin, daß eine zuverlässige Trennung erreicht wird und daß es wirtschaftlich ist, weil die Verweildauer der Folienschnitzel kurz und der Lösungsmittel-Einsatz im Verhältnis zur Menge des abzutrennenden Klebstoffes gering ist. Außerdem fällt der Klebstoff in Form einer Lösungsmittel-Klebstoff-Dispersion an, die auch eine unmittelbare Neuverwendung des Klebstoffes z.B. durch Auftragen auf Folien erlaubt.

Zur Erzielung besonders sauberer Folienschnitzel wird das neue Verfahren vorzugsweise zweistufig oder am besten dreistufig geführt, indem die Verfahrensschritte a) und b) eine erste Stufe des Verfahrens bilden, der sich eine zweite Stufe oder eine zweite und eine Dritte Stufe jeweils mit den Verfahrensschritten a) und b) anschließen, wobei die verarbeiteten Folienschnitzel jeweils von der vorhergehenden Stufe stammen, die in der zweiten und gegebenenfalls in der dritten Stufe erhaltene Lösungsmittel-Klebstoff-Dispersion der jeweils vorhergehenden Stufe als Lösungsmittel zugeführt wird und frisches Lösungsmittel nur in der letzten Stufe eingesetzt wird.

Zur Durchführung des Verfahrensschrittes a) ist vorzugsweise vorgesehen, daß das Dispergieren des an den Folienschnitzeln haftenden Klebstoffs mit dem Lösungsmittel jeweils in einem inbesondere mehrstufigen, geschlossenen Kneters erfolgt. Dabei kann es ausreichend sein, in der zweiten oder dritten Verfahrensstufe einen Kneter mit weniger Knetstufen als in den ersten Verfahrensstufen einzusetzen. Geeignete Kneter sind im Handel erhältlich.

Für den zweiten Verfahrensschritt b) wird vorzugsweise vorgeschlagen, daß das Trennen des dispergierten Klebstoffs von den Folienschnitzeln durch Einleiten von Quetschkräften in einer Förderschnecke erfolgt, deren Volumen pro Längeneinheit in Förderrichtung abnimmt und deren Mantelfläche aus einem Siebblech besteht, aus dem die Lösungsmittel-Klebstoff-Dispersion austreten kann. Die Abnahme des Volumens pro Längeneinheit der Förderschnecke kann entweder durch eine Veränderung der Ganghöhe der Schneckenwelle oder aber durch eine sich in Förderrichtung verjüngende Gehäuseform verwirklicht sein.

Alternativ kann das Trennen des dispergierten Klebstoffs von den Folienschnitzeln durch Einleiten von Scherkräften in einem Behälter erfolgen, an dessen Boden zwei koaxiale, sich in einer Radialebene gegenläufig drehende Flügelrotoren angeordnet sind, zwischen deren Flügelgruppen eine zylindrische Trennzone besteht. In dieser zylindrischen Trennzone, der die Folienschnitzel durch eine im Behälter erzeugte Strömung zugeführt werden, entstehen besonders hohe Scherkräfte, welche ebenso wie bei der ersten Alternative eine saubere Trennung des dispergierten Klebstoffs von den Folienschnitzeln ermöglichen.

Die Art des zu verwendenden Lösungsmittels hängt im wesentlichen von der Art des an den Folienschnitzeln haftenden Klebstoffs ab. Erfahrungen in der Testphase des vorliegenden Verfahrens haben gezeigt, daß das Lösungsmittel bevorzugterweise einen Siedepunkt von 40 bis 90 °C, insbesondere von 50 bis 70 °C besitzen sollte.

Vorzugsweise wird als Lösungsmittel Benzin mit einem Benzolgehalt von maximal 1 % verwendet. Hierbei erfolgt die Limitierung des Benzolgehalts im Hinblick auf Sicherheitsvorschriften. Das Benzin ist Leichtbenzin, bestehend aus geradkettigen oder verzweigten, vorzugsweise aber geradkettigen, gesättigten Kohlenwasserstoffen, wobei unter Berücksichtigung der bevorzugten Siedepunkte Pentan oder Hexan in Frage kommen. Da Hexan aufgrund seiner Gefährlichkeit jedoch ungern verwendet wird, ist es vorteilhafter, eine Mischung aus Pentan und Hexan oder besonders bevorzugt Pentan allein zu verwenden.

Die bevorzugte Prozeßtemperatur liegt bei einem Wert zwischen 25 und 35 °C und die Dispergierzeit in der ersten Verfahrensstufe beträgt ca. 3 Minuten.

Vorzugsweise besitzt die der ersten Verfahrensstufe entnehmbare und an den Folienhersteller rückführbare Dispersion ein Mischungsverhältnis von etwa 20 % Klebstoff und 80 % Lösungsmittel, wodurch gleichzeitig den Anforderungen des Folienherstellers und denen des vorliegenden Verfahrens Rechnung getragen werden kann.

Im folgenden wird ein bevorzugtes Ausführungsbeispiel des Verfahrens mit einer vierstufigen Knetvorrichtung in jeder Verfahrensstufe anhand einer Prinzip-Fließskizze erläutert.

Die Skizze zeigt ein insgesamt dreistufiges Gegenstromverfahren. In einer ersten Verfahrensstufe 7 werden einer ersten Stufe 10 einer insgesamt vierstufigen Knetvorrichtung 16 über einen Vorratsbehälter 2 mit Klebstoff beschichtete Folienschnitzel 4 zugeführt. Diese Folienschnitzel 4 können in der Praxis mit Wasser benetzt sein, womit vom Lieferanten (Folienhersteller) ein Zusammenkleben der Folienschnitzel verhindert werden soll. Das somit in den Prozeß eingeführte Wasser stört jedoch das Verfahren nicht, da das Wasser mit dem Benzin ein Azeotrop bildet und bei einer späteren Wiederverwendung des Klebers mit dem Lösungsmittel verdunstet.

Das Lösungsmittelbad 1 innerhalb der Knetvorrichtung 16 wird von der aus der Förderschnecke 3 der zweiten Verfahrensstufe 8 austretenden Klebstoff-Lösungsmittel-Dispersion gespeist. Die Knetstufen 10 bis 13 der Knetvorrichtung 16 enthalten jeweils hier nicht dargestellte Knetrotoren, welche die Folienschnitzel 4 in Förderrichtung (in der Skizze nach links) von Knetstufe zu Knetstufe weitertransportieren. Nach einer Verweildauer (Dispergierzeit) der Folienschnitzel von ca. 3 Minuten in dem Lösungsmittelbad 1 hat sich eine pastöse, honigartige Dispersion aus dem Klebstoff und dem Lösungsmittel gebildet, wobei diese Dispersion bei Austritt der Folienschnitzel aus der vierten Knetstufe 13 noch an den Folienschnitzeln 4 haftet. An die Knetvorrichtung 16 schließt sich in Förderrichtung eine Förderschnecke 3 mit einer Schneckenwelle 6 an, deren Volumen pro Längeneinheit in Förderrichtung durch eine Verjüngung der Mantelfläche der Förderschnecke 3 abnimmt. Diese Abnahme des Volumens pro Längeneinheit bewirkt eine Einleitung von Quetschkräften zwischen der Schneckenwelle 6 und der Mantelinnenfläche der Förderschnecke 3, wodurch ein mechanisches Ablösen der an den Folienschnitzeln 4 haftenden Dispersion bewirkt wird. Diese Klebstoff-Lösungsmittel-Dispersion tritt durch ein in der Mantelfläche der Förderschnecke 3 befindliches Siebblech 5 aus. Im Falle dieser ersten Verfahrensstufe 7 ist die dort austretende Dispersion bereits diejenige Mischung, die an den Folienhersteller zurückgeführt wird; sie weist beispielsweise ein Mischungsverhältnis von 20 : 80 auf.

Die aus der Förderschnecke 3 der ersten Verfahrensstufe 7 extrudierenden Folienschnitzel 4 sind bereits weitestgehend von Klebstoff befreit und werden über einen Pufferbehälter 11 einer zweiten Verfahrensstufe 8 zugeführt. In dieser zweiten Verfahrensstufe 8 erfolgt eine weitere Reinigung der Folienschnitzel 4 sowie eine Resttrennung des Klebstoffs von den Folienschnitzeln. Die zweite Verfahrensstufe 8 sowie die dritte Verfahrensstufe 9 sind prinzipiell gleich aufgebaut, wie die erste Verfahrensstufe 7, weshalb der Übersichtlichkeit halber auf die Benennung der gleichen Teile mit Bezugszeichen verzichtet wurde. Die aus dem Siebblech 5 der Förderschnecke 3 der zweiten Verfahrensstufe 8 austretende Dispersion wird im Gegenstromverfahren dem Lösungsmittelbad 1 der ersten Verfahrensstufe 7 zugeführt. Hingegen erhält das Lösungsmittelbad der zweiten Verfahrensstufe 8 sein Lösungsmittel (Dispersion) aus der Förderschnecke 3 der dritten Verfahrensstufe 9, deren Lösungsmittelbad über den Pufferbehälter 15 mit frischem Lösungsmittel gespeist wird. Die aus der Förderschnecke 3 der zweiten Verfahrensstufe 8 extrudierenden Folienschnitzel 4 werden ebenfalls dem Pufferbehälter 15 der dritten Verfahrensstufe 9 zugeführt.

Das beschriebene Gegenstromverfahren besteht somit darin, die Folienschnitzel der Reihe nach den verschiedenen Verfahrensstufen 7 bis 9 zuzuführen, während das frische Lösungsmittel in der dritten Verfahrensstufe 9 zugesetzt und jeweils in Form einer Klebstoff-Lösungsmittel-Dispersion in gegenläufiger Reihenfolge zunächst der zweiten Verfahrensstufe 8 und dann der ersten Verfahrensstufe 7 zugeleitet wird.

Bei dem beschriebenen Verfahren wird bevorzugt Benzin als Lösungsmittel verwendet, welches einen Siedepunkt zwischen 50 und 70 °C sowie einen Benzolgehalt von maximal 1 % besitzt. Chemisch handelt es sich bei dem Benzin bevorzugterweise um Pentan, jedoch ist auch Hexan oder eine Mischung aus Pentan und Hexan denkbar.

Die Prozeßtemperatur wird bevorzugt auf einen Wert zwischen 25 und 35 °C gehalten, bei der eine Dispergierzeit in der ersten Verfahrensstufe 7 von ca. 3 Minuten erzielbar ist.

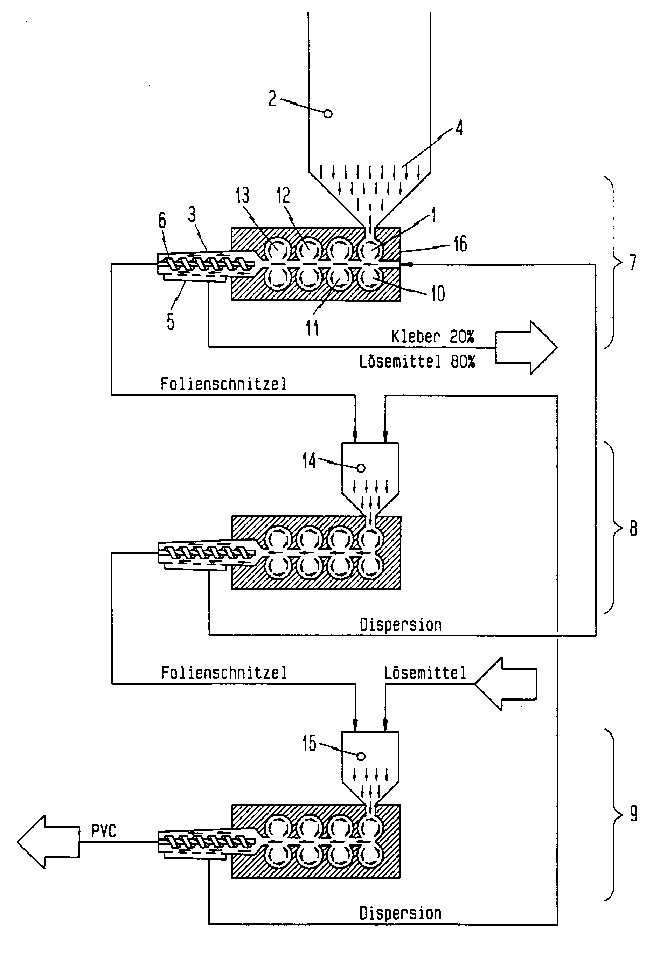

## Patentansprüche

1. Verfahren zum Recycling von mit Klebstoff beschichteten und in Schnitzelform vorliegenden Kunststoffolien durch Trennen des Kunststoffmaterials und des Klebstoffes mittels eines Lösungsmittels für den Klebstoff,
gekennzeichnet durch folgende Verfahrensschritte:
a) die Folienschnitzel werden unter Zugabe des Lösungsmittels für eine vorbestimmte Zeitdauer geknetet derart, daß der Klebstoff im Lösungsmittel dispergiert;
b) die Lösungsmittel-Klebstoff-Dispersion wird anschließend von den Folienschnitzeln durch mechanische Krafteinwirkung getrennt und abgeführt.

2. Verfahren nach Anspruch 1,
dadurch gekennzeichnet, daß die Verfahrensschritte a) und b) eine erste Stufe (7) des Verfahrens bilden, der sich eine zweite Stufe (8) oder eine zweite und eine dritte Stufe (9) jeweils mit den Verfahrensschritten a) und b) anschließen, wobei die verarbeiteten Folienschnitzel jeweils von der vorhergehenden Stufe stammen, die in der zweiten und gegebenenfalls in der dritten Stufe erhaltene Lösungsmittel-Klebstoff-Dispersion der jeweils vorhergehenden Stufe als Lösungsmittel zugeführt wird und frisches Lösungsmittel nur in der letzten Stufe eingesetzt wird.

3. Verfahren nach Anspruch 1 oder 2,
dadurch gekennzeichnet, daß die Folienschnitzel in einem geschlossenen Raum (Lösungsmittelbad) geknetet werden.

4. Verfahren nach Anspruch 3,
dadurch gekennzeichnet, daß die Folienschnitzel mittels eines geschlossenen, vorzugsweise mehrstufigen Kneters (16) geknetet werden.

5. Verfahren nach Anspruch 1, 2, 3 oder 4,
dadurch gekennzeichnet, daß die Lösungsmittel-Klebstoff-Dispersion von den Folienschnitzeln mittels einer Förderschnecke (3) getrennt wird, deren Volumen pro Längeneinheit in Förderrichtung abnimmt und deren Mantelfläche ein Siebblech (5) aufweist, aus dem die Lösungsmittel-Kleberdispersion austreten kann.

6. Verfahren nach Anspruch 1, 2, 3 oder 4,
dadurch gekennzeichnet, daß die Lösungsmittel-Klebstoff-Dispersion von den Folienschnitzeln (4) in einem Behälter getrennt wird, an dessen Boden zwei koaxiale, sich in einer Radialebene gegenläufig drehende Flügelrotoren angeordnet sind, zwischen deren Flügelgruppen eine zylindrische Trennzone besteht.

7. Verfahren nach einem der Ansprüche 1-6,
dadurch gekennzeichnet, daß das Lösungsmittel einen Siedepunkt von 40 bis 90 °C, insbesondere von 50 bis 70 °C, besitzt.

8. Verfahren nach Anspruch 7,
dadurch gekennzeichnet, daß als Lösungsmittel Benzin mit einem Benzolgehalt von maximal 1 % verwendet wird.

9. Verfahren nach einem der Ansprüche 1-8,
dadurch gekennzeichnet, daß die Prozeßtemperatur auf einem Wert zwischen 25 und 35 °C gehalten wird.

10. Verfahren nach einem der Ansprüche 1-9,
dadurch gekennzeichnet, daß die Dispergierzeit in der ersten Verfahrensstufe (7) ca. 3 Minuten beträgt.

11. Verfahren nach einem der Ansprüche 1-10,
dadurch gekennzeichnet, daß Folienschnitzel und frisches Lösungsmittel so zugeführt werden, daß die abgeführte Lösungsmittel-Klebstoff-Dispersion ein Mischungsverhältnis von etwa 20 % Klebstoff und 80 % Lösungsmittel besitzt.

## Claims

1. A method of recycling plastic sheet material coated with adhesive and available in chopped form by separating the plastic from the adhesive by means of a solvent for the adhesive, characterized by the following method steps:
(a) the chopped sheet material is kneaded for a predetermined period of time while the solvent is being added so that the adhesive will become dispersed in the solvent;
(b) subsequently the solvent-adhesive dispersion is separated from the chopped sheet material by mechanical force and discharged.

2. The method as claimed in claim 1, characterized in that method steps (a) and (b) present a first stage (7) of the process, followed by a second stage (8) or by second and third stages (9), each comprising method steps (a) and (b), the respective chopped sheet material under treatment coming from the preceding stage, the solvent-adhesive dispersion obtained in the second stage and, where applicable, in the third stage being fed as solvent to the respective preceding stage, and fresh solvent being used only in the last stage.

3. The method as claimed in claim 1 or 2, characterized in that the chopped sheet material is kneaded in a closed space (solvent bath).

4. The method as claimed in claim 3, characterized in that the chopped sheet material is kneaded by means of a closed, preferably multi-stage kneader (16).

5. The method as claimed in claim 1, 2, 3, or 4, characterized in that the solvent-adhesive dispersion is separated from the chopped sheet material by means of a conveyor screw (3) which is of decreasing volume per unit length in conveying direction and the shell of which comprises a perforated plate (5) for the solvent-adhesive dispersion to escape.

6. The method as claimed in claim 1, 2, 3, or 4, characterized in that the solvent-adhesive dispersion is separated from the chopped sheet material (4) in a vessel at the bottom of which two coaxial wing rotors are arranged which rotate in opposite sense in a radial plane and between the wing groups of which there is a cylindrical separating zone.

7. The method as claimed in any one of claims 1 to 6, characterized in that the solvent has a boiling point of from 40 to 90 °C, especially from 50 to 70 °C.

8. The method as claimed in claim 7, characterized in that the solvent used is benzine having a maximum benzene content of 1%.

9. The method as claimed in any one of claims 1 to 8, characterized in that the process temperature is maintained at a value between 25 and 35 °C.

10. The method as claimed in any one of claims 1 to 9, characterized in that the dispersing time in the first stage (7) of the process is about 3 minutes.

11. The method as claimed in any one of claims 1 to 10, characterized in that chopped sheet material and fresh solvent are supplied such that the solvent-adhesive dispersion discharged will have a mixing ratio of approximately 20% of adhesive and 80% of solvent.

## Revendications

1. Procédé de recyclage de feuilles en matière plastique sous forme de chutes enduites d'adhésif par séparation de la matière plastique et de l'adhésif au moyen d'un solvant pour l'adhésif,
caractérisé par les opérations de procédé suivantes :
a) les chutes de feuilles sont malaxées en ajoutant le solvant pendant une période de temps prédéterminée de manière que l'adhésif se disperse dans le solvant ;
b) la dispersion d'adhésif et de solvant est ensuite séparée des chutes de feuilles sous l'action d'une force mécanique pour être évacuée.

2. Procédé selon la revendication 1,
caractérisé en ce que les opérations de procédé a) et b) constituent une première phase de procédé (7) à laquelle viennent se greffer une seconde phase (8), ou une seconde et une troisième phase (9) comprenant respectivement les opérations de procédé a) et b), les chutes de feuilles à transformer provenant systématiquement de la phase précédente, la dispersion d'adhésif et de solvant, provenant respectivement de la phase précédente et obtenue dans la seconde et éventuellement dans la troisième phase, étant introduite en tant que solvant et le solvant frais n'intervenant que dans la dernière phase.

3. Procédé selon la revendication 1 ou 2,
caractérisé en ce que les chutes de feuilles sont malaxées dans un espace fermé (bain de solvant).

4. Procédé selon la revendication 3,
caractérisé en ce que les chutes de feuilles sont malaxées au moyen d'un malaxeur (16) fermé et de préférence multi-étagé.

5. Procédé selon la revendication 1, 2, 3 ou 4
caractérisé en ce que la dispersion de solvant et d'adhésif est séparée des chutes de feuilles (4) au moyen d'un convoyeur à vis sans fin (3) dont le volume par unité de longueur diminue dans le sens de transport et dont la surface d'enveloppe présente une tôle perforée (5) d'où peut sortir la dispersion de solvant et d'adhésif.

6. Procédé selon la revendication 1, 2, 3 ou 4
caractérisé en ce que la dispersion de solvant et d'adhésif est séparée des chutes de feuilles (4) dans un conteneur au fond duquel sont disposés deux rotors à hélice tournant en sens inverse dans un plan radial entre les groupes d'hélices séparés par une zone de séparation cylindrique.

7. Procédé selon l'une des revendications 1-6,
caractérisé en ce que le solvant présente une température d'ébullition de 40 à 90°C, en particulier de 50 à 70°C.

8. Procédé selon la revendication 7
caractérisé en ce que le solvant utilisé est de l'essence dont la teneur en benzène est de maximum 1 %.

9. Procédé selon l'une des revendications 1-8,
caractérisé en ce que la température de traitement est maintenue à une valeur allant de 25 à 35°C.

10. Procédé selon l'une des revendications 1-9,
caractérisé en ce que le temps de dispersion dans la première phase de procédé (7) est de l'ordre de 3 minutes.

11. Procédé selon l'une des revendications 1-10,
caractérisé en ce que des chutes de feuilles et du solvant frais sont ajoutées de manière à doter la dispersion de solvant et d'adhésif évacuée d'une proportion de mélange d'environ 20 % d'adhésif et de 80 % de solvant.
